(19) Europäisches Patentamt
European Patent Office
Office européen des brevets

(11) **EP 4 547 744 B1**

(12) **EUROPEAN PATENT SPECIFICATION**


(45) Date of publication and mention of the grant of the patent:
**12.08.2026 Bulletin 2026/33**

(21) Application number: **23730927.3**

(22) Date of filing: **17.05.2023**

(51) International Patent Classification (IPC):
***C08J 11/24*** *(2006.01)*

(52) Cooperative Patent Classification (CPC):
**C08G 63/916; C08G 63/183;** C08J 2367/02; Y02P 20/582; Y02W 30/62

(86) International application number:
**PCT/IB2023/055077**

(87) International publication number:
**WO 2024/003626 (04.01.2024 Gazette 2024/01)**


(54) **A METHOD FOR MANUFACTURING AN OLIGOMERIC PET SUBSTRATE FROM PET-CONTAINING WASTE MATERIAL**

VERFAHREN ZUR HERSTELLUNG EINES OLIGOMEREN PET-SUBSTRATS AUS PET-HALTIGEM ABFALLMATERIAL

PROCÉDÉ DE FABRICATION D’UN SUBSTRAT DE PET OLIGOMÈRE À PARTIR DE DÉCHETS CONTENANT DU PET


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.06.2022 US 202263356045 P**

(43) Date of publication of application:
**07.05.2025 Bulletin 2025/19**



(73) Proprietor: **Koch Technology Solutions UK Limited**
**London**
**EC2V 7AF (GB)**

(72) Inventors:
- **HAMILTON, Clive Alexander**
  **Wichita, Kansas 67220 (US)**
- **WILLIAMSON, George Malcolm**
  **Wichita, Kansas 67220 (US)**

(74) Representative: **Stepney, Gregory John**
**Withers & Rogers LLP**
**2 London Bridge**
**London SE1 9RA (GB)**



(56) References cited:
- **CASTRO ALINE MACHADO DE ET AL: "Enzyme-catalyzed simultaneous hydrolysis-glycolysis reactions reveals tunability on PET depolymerization products", BIOCHEMICAL ENGINEERING JOURNAL, ELSEVIER, AMSTERDAM, NL, vol. 137, 15 June 2018 (2018-06-15), pages 239 - 246, XP085435101, ISSN: 1369-703X, DOI: 10.1016/J.BEJ.2018.06.007**
- **GUCLU G ET AL: "Simultaneous glycolysis and hydrolysis of polyethylene terephthalate and characterization of products by differential scanning calorimetry", POLYMER, ELSEVIER, AMSTERDAM, NL, vol. 44, no. 25, 31 December 2003 (2003-12-31), pages 7609 - 7616, XP004471090, ISSN: 0032-3861, DOI: 10.1016/J.POLYMER.2003.09.062**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 4 547 744 B1

## Description

### FIELD

The present disclosure relates to methods for manufacturing an oligomeric PET substrate from post-consumer PET-containing waste material, an oligomeric PET substrate for use in manufacturing recycled PET and also PET polymer made from 5-100% recycled PET which comprises the oligomeric PET substrate.

### BACKGROUND

PET (polyethylene terephthalate) is a synthetic material that was first made in the mid-1940s. PET has desirable properties and processing abilities and hence is now used extensively on a global scale for packaging applications in the food and beverage industries and for industrial products, as well as in the textile industry.

Typically, PET has petrochemical origins. Purified terephthalic acid is first formed via aerobic catalytic oxidation of p-xylene in acetic acid medium in a purified terephthalic acid manufacturing facility. This purified terephthalic acid (PTA) is subsequently reacted with ethylene glycol to produce a PTA-based oligomer (and water), which polycondenses to form PET polymer. An alternative route to PET polymer is via polymerisation of a bis-hydroxylethyleneterephthalate (BHET) monomer, although this route is less favorable from a process economic point of view. The BHET monomer is formed through the reaction of dimethylterephthalate (DMT) (a diester formed from terephthalic acid and methanol) with ethylene glycol, and then the BHET monomer polymerizes with itself to form longer chains of PET.

In a PET manufacturing process, there are three main stages in the melt-phase process to make the PET polymer: (1) esterification, (2) pre-polymerization and (3) polymerization. When making PET resin, the PET polymer enters a further solid-state (SSP) stage to make further changes which include increasing the molecular weight of the polymer. In the initial esterification stage, the PTA (or DMT) and ethylene glycol are mixed and fed into the esterification unit, where esterification, which may be catalysed or uncatalyzed, takes place under atmospheric pressure and a temperature in the range of 270°C to 295°C. Water (or methanol in the case of DMT) resulting from the esterification reaction and excess ethylene glycol are vaporised. Additives, including catalysts and toners, are typically added to the process in between the esterification stage and the subsequent pre-polymerization stage. In the pre-polymerization stage, the product from the esterification unit is sent to the pre-polymerization unit, (or up-flow pre-polymerizer (UFPP)), and reacted with extra ethylene glycol at a temperature in the range of 270°C to 295°C and a significantly reduced pressure to allow the degree of polymerization of the oligomer to increase. During the polymerization stage, the product from the pre-polymerization stage is again subjected to low pressures and a temperature in the range of 270°C to 295°C in a horizontal polymerization unit to further allow an increase in the degree of polymerization to approximately 80-120 repeat units. In embodiments,, this is known as the Finisher or Finisher vessel. When making PET resin, a fourth, solid-state polymerisation (SSP) stage is usually required involving a crystallisation step wherein the amorphous pellets produced in the melt phase process are converted to crystalline pellets, which are then subsequently processed further depending on the final PET product, which may be as diverse as containers/bottles for liquids and foods, or industrial products and resins.

However, the widespread usage of PET has led to environmental problems. In particular, the popularity of single-use PET plastic bottles has resulted in these bottles being discarded and although they could be recycled, the vast majority end up in landfill, with a significant number ending up in the oceans. Being non-biodegradable, these discarded single-use PET plastic bottles cause damage to marine ecosystems and organisms.

Clearly, it is desirable to recycle post-consumer PET-containing waste material and especially single-use PET plastic bottles, to reduce the amount of plastic sent to landfill. It is already known to take post-consumer PET-containing waste material, such as PET plastic bottles, and mechanically break it up to produce post-consumer recycled (PCR) flake. This PCR flake may be glycolysed to convert it to rBHET. This rBHET can then be used in a PET manufacturing process to make recycled PET (rPET; so-called because the oligomer upon which it is based is derived from post-consumer PET or PCR, rather than PTA). This circumvents the need to use more PTA with petrochemical origins, in combination with ethylene glycol, to make a PTA-based oligomer in a vPTA process or to make vBHET in a vDMT process. In addition, since lower amounts of petrochemicals are required to make recycled PET (rPET) as compared to new PET, known as virgin PET (vPET), rPET consequently has a lower carbon footprint than vPET. Therefore, rPET is attractive based on its 'green' credentials, which themselves may confer economic benefits in certain jurisdictions.

However, rPET made from rBHET tends to have lower reactivity in the melt phase process and in the solid phase polymerization stage. If rBHET is used in a PET manufacturing process, the amount of rPET manufactured is approximately 20% lower than if a PTA-based oligomer is used (i.e. short-chain PET oligomers made through esterification of purified terephthalic acid with ethylene glycol). Further still, rPET made from rBHET tends to be darker (lower L*) and more yellow, which is mainly due to impurities present in the rPET polymer. At present, therefore, rPET manufacturing processes using rBHET (glycolysis product of PET waste) are neither attractive nor competitive when compared with vPET processes using a PTA-based oligomer or vBHET.

Castro Aline Machado DE et al, Biochemical Engineering Journal, 2018, 137, 239-246 discloses the simultaneous hydrolysis-glycolysis of post-consumer PET catalysed by a biocatalyst HiC. Guclu et al discloses the simultaneous glycolysis and neutral hydrolysis of PET waste in xylene at 170-190 °C for 3 hours.

Therefore, there exists a need to produce an oligomeric PET substrate which has an increased reactivity and consequently increased ability to polymerize to form rPET in order to compete with processes making vPET.

## SUMMARY OF INVENTION

The present disclosure provides, inter alia, a method for producing an oligomeric PET substrate from post-consumer PET-containing waste material, wherein said oligomeric PET substrate is for use in a rPET manufacturing process, comprising the steps of: i) Reacting post-consumer PET-containing waste material in the presence of ethylene glycol and water in a reaction zone; and ii) Producing an oligomeric PET substrate represented by Formula I:

(I)

wherein R1 is a carboxyl end group or a hydroxyl end group, R2 is a carboxyl end group (COOH) or a hydroxyl end group (OH), and n is a degree of polymerization; and wherein n is 3 to 10, preferably 3 to 7.

In some embodiments, the oligomeric PET substrate has a CEG (mols acid ends / te of material) of from 300 to 1500, preferably from 500 and 1200 and more preferably from 700 to 1100. In one non-limiting embodiment, the oligomeric PET substrate has a hydroxyl end group ratio: carboxyl end group ratio in a range of 1.66 to 6.66, preferably in a range of 2.22 to 4.0.

In one non-limiting embodiment, the ethylene glycol and water are added in either order or together. In one non-limiting embodiment, the ethylene glycol is added in the range 5wt% to 50wt%. In one non-limiting embodiment, the ethylene glycol is added in the range 10wt% to 40wt%. In one non-limiting embodiment, the ethylene glycol is added in the range 12wt% to 18wt%. In one non-limiting embodiment, the water is added in the range 2wt% to 20wt%. In one non-limiting embodiment, the water is added in the range 5wt% to 10wt%. In one non-limiting embodiment, the water is added in the range 6wt% to 8wt%. In one non-limiting embodiment, the ethylene glycol is added at 12wt% to 18wt% and said water is added at 5wt% to 9wt%.

In one non-limiting embodiment, the waste material is reacted with ethylene glycol and water at a temperature between 120°C and 300°C. In one non-limiting embodiment, the waste material is reacted with ethylene glycol and water at a temperature between 150°C and 270°C. In one non-limiting embodiment, the waste material is reacted with ethylene glycol and water in the reaction zone at a pressure between 3barg and 30barg (300 kPag and 3000 kPag).

In one non-limiting embodiment, the reaction zone precedes the injection of additives. In one non-limiting embodiment, the claimed method has a residence time in the reaction zone between 30 minutes and 120 minutes. In one non-limiting embodiment, the residence time is between 40 and 50 minutes. In one non-limiting embodiment, the reaction is catalysed by a catalyst already present in said post-consumer PET-containing waste material or is an exogenously added catalyst. In one non-limiting embodiment, the exogenously added catalyst is a commonly used PET catalyst selected from an antimony-containing catalyst, titanium-containing catalyst, a zinc-containing catalyst, an acetate-containing catalyst, a manganese-containing catalyst, an aluminium-containing catalyst or a tin-containing catalyst. In one non-limiting embodiment, the catalyst is any one of antimony trioxide, antimony glycolate, antimony triacetate, titanium alkoxide, zinc acetate or manganese acetate. In a further non-limiting embodiment, the reaction is uncatalyzed.

In one non-limiting embodiment, the rPET manufacturing process is a conventional rPET manufacturing process or a modified vPET manufacturing process. In one non-limiting embodiment, the post-consumer PET-containing waste material comprises PCR flake or polyester fibre. In one non-limiting embodiment, the polyester fibre is derived from waste polyester sources, such as shirts, bedlinen, coat and duvet linings or municipal waste. In one non-limiting embodiment, the oligomeric PET substrate is fed directly or indirectly into said rPET manufacturing process.

Another aspect of the invention relates to an oligomeric PET substrate produced from post-consumer PET-containing waste material, wherein said oligomeric PET substrate is represented by Formula I :

(I)

R1 being a carboxyl end group or a hydroxyl end group, R2 being a carboxyl end group or a hydroxyl end group, and n being a degree of polymerization, wherein said oligomeric PET substrate is represented by any two of these characteristics: i) n is a degree of polymerization of 3-10, preferably from 3 to 7; ii) a CEG (mols acid ends / te of material) of between 300 and 1500; or iii) a hydroxyl end group: carboxyl end group ratio in a range of 1.66 to 6.66, and wherein said oligomeric PET substrate is used in synthesis of a polymer comprising 5-100% rPET.

Unless otherwise defined, all technical and scientific terms used herein have the same meaning as commonly understood by one of ordinary skill in the art to which this invention pertains. Although methods and materials similar or equivalent to those described herein can be used to practice the invention, suitable methods and materials are described below. In case of conflict, the present specification, including definitions, will control.

In addition, the materials, methods, and examples are illustrative only and not intended to be limiting. The details of one or more embodiments of the invention are set forth in the accompanying drawings and the description below. Other features, objects, and advantages of the invention will be apparent from the description and the drawings, and from the claims. The word "comprising" in the claims may be replaced by "consisting essentially of" or with "consisting of," according to standard practice in patent law.

Unless specifically stated otherwise or obvious from context, as used herein, the term "about" is understood as within a range of normal tolerance in the art, for example within 2 standard deviations of the mean. About can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

## BRIEF DESCRIPTION OF THE FIGURES

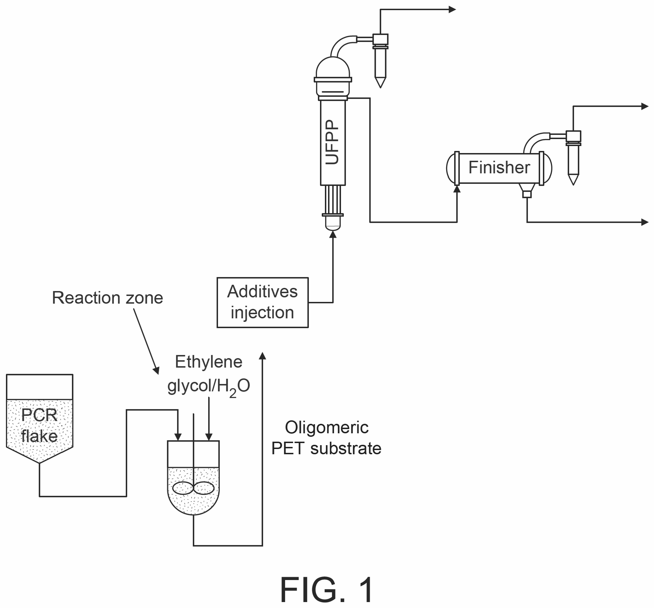

Figure 1 is a schematic of the claimed process showing the reaction zone where post-consumer PET-containing waste material is reacted with ethylene glycol and water.

## DETAILED DESCRIPTION OF THE PREFERRED EMBODIMENTS

Disclosed herein are methods to produce an oligomeric PET substrate from post-consumer PET-containing waste material, and an oligomeric PET substrate for use in manufacturing rPET. In the methods of the present invention, post-consumer PET-containing waste material is mixed with ethylene glycol and water to produce the oligomeric PET substrate.

The methods disclosed herein address a problem recognized in the art with respect to the need to produce an oligomeric PET substrate which has an increased reactivity and consequently increased ability to polymerize to form rPET in order to compete with processes making vPET.

The term "PET" or "PET polymer" refers to polyethylene terephthalate.

The term "PTA" refers to purified terephthalic acid.

The term "vPTA" refers to PTA synthesised via aerobic catalytic oxidation of p-xylene in acetic acid medium.

As used herein, "PTA-based oligomer" refers to a short-chain PET oligomer synthesised through a process requiring esterification of purified terephthalic acid with ethylene glycol. Purified terephthalic acid (PTA) is reacted with ethylene glycol to produce the PTA-based oligomer (and water), which polycondenses to form PET polymer. When PTA is reacted with ethylene glycol, a short chain PTA-based oligomer is formed which is characterised by a Dp (degree of polymerisation or number of repeat units) and a CEG (or carboxyl acid end group concentration). The degree of polymerisation (Dp) is calculated from the number average molecular weight Mn by the following formula: Dp = (Mn - 62)/192, in which Mn is calculated by rearranging the following correlation for IV (intrinsic viscosity): $IV = 1.7e\text{-}4\ (Mn)^{0.83}$. The intrinsic viscosity (IV) of the polyester can be measured by a melt viscosity technique equivalent to ASTM D4603-96. Typically, for a PTA-based oligomer formed by reacting PTA with ethylene glycol, the degree of polymerisation is usually between 3 and 7 and the CEG is usually between 500 and 1200 (mols acid ends / te of material). The hydroxyl end group (HEG) ratio to carboxyl end group (CEG) is determined from the CEG measurement and the rearrangement of following calculation of Mn: Mn = 2e6 / (CEG + HEG).

As used herein, "PET manufacturing process" refers to a facility that produces PET. Such a facility may be integrated with a PTA manufacturing process or may be entirely independent.

As used herein, "post-consumer PET-containing waste material," refers to any waste stream that contains at least 10% PET waste. The post-consumer PET-containing waste material may therefore include 10% to 100% PET. The post-consumer PET-containing waste material may be municipal waste which itself includes at least 10% PET waste, such as PET plastic bottles or PET food packaging or any consumer recycled PET-containing waste material such as waste polyester fibre. Waste polyester fibre sources include items such as clothing items (shirts, trousers, dresses, coats, etc.), bed linen, duvet linings or towels. The "post-consumer PET-containing waste material" may further include post-consumer recycled (PCR) flake, which is waste PET plastic bottles which have been mechanically broken into small pieces in order to be used in a recycling process.

As used herein, "vPET" refers to virgin PET, which is PET synthesised through a process requiring esterification of purified terephthalic acid with ethylene glycol. The purified terephthalic acid (PTA) is reacted with ethylene glycol to produce a PTA-based oligomer (and water), which polycondenses to form PET polymer. Alternatively, vPET may be formed through the reaction of dimethylterephthalate (DMT) (a diester formed from terephthalic acid and methanol) with ethylene glycol. A BHET monomer is formed through the reaction of dimethylterephthalate (DMT) (a diester formed from terephthalic acid and methanol) with ethylene glycol, and then the BHET monomer polymerises with itself to form longer chains of PET.

As used herein, "rPET" refers to recycled PET, which is PET manufactured entirely or at least partially from oligomers that have been derived from post-consumer PET-containing waste material. The rPET may be synthesised from oligomers that are 100% derived from a post-consumer PET-containing waste material. Alternatively, the rPET may be synthesised from a combination of oligomers which include those derived from post-consumer PET-containing waste material and also those from vBHET or PTA-based oligomers used to make vPET. In one non-limiting embodiment, the rPET includes at least 5% oligomeric PET substrate derived from post-consumer PET-containing waste material. In another non-limiting embodiment, the rPET includes at least 50% oligomeric PET substrate derived from post-consumer PET-containing waste material. In yet another non-limiting embodiment, the rPET includes at least 80% oligomeric PET substrate derived from post-consumer PET-containing waste material.

As used herein, "rPET manufacturing process" refers to both manufacturing processes and facilities that have been purposely designed and built to synthesise recycled PET (rPET), namely PET from substrates that include those derived from any post-consumer PET-containing waste material in addition to virgin substrates (i.e. vBHET or PTA-based oligomer), and also manufacturing processes and facilities that were built to synthesise vPET but which have been modified or retrofitted to allow the production of rPET. Changes that are required to a vPET facility in order to produce rPET are typically not major structurally but instead require a number of process changes.

The term "BHET" refers to the bis-hydroxylethyleneterephthalate monomer ($C_{12}H_{14}O_6$), including all structural isomers, which is characterised as having no carboxyl end groups, namely a carboxyl acid end group concentration (CEG) of zero. The chemical structure of the para-isomer of the BHET monomer is represented below:

To produce PET, BHET reacts with itself to make longer chains in a polycondensation reaction, thereby forming polyethylene terephthalate and liberating ethylene glycol in the process. BHET, namely the BHET monomer, is typically formed through reaction of dimethylterephthalate (DMT) with ethylene glycol but it is also a minor component of the oligomer made from PTA plus ethylene glycol, i.e. part of the oligomeric molecular weight distribution. When PTA is reacted with ethylene glycol, a short chain PTA-based oligomer is formed which is characterised by a Dp (degree of polymerisation or number of repeat units) and a CEG (or carboxyl acid end group concentration). Typically, for a PTA-based oligomer formed by reacting PTA with ethylene glycol, the degree of polymerisation is usually between 3 and 7 or between 25 to 35 and the CEG is usually between 500 and 1200 or between 150 and 190 (mols acid ends / te of material).

The term "vBHET" refers to virgin BHET, which is the BHET monomer formed through reaction of dimethylterephthalate (DMT) with ethylene glycol.

The term "rBHET" refers to recycled BHET, which is the BHET molecule produced by glycolyzing PET. Post-consumer PET-containing waste material, such as PET plastic bottles, is mechanically broken down to produce post-consumer recycled (PCR) flake. This PCR flake is then glycolysed to convert it to rBHET.

As used herein, "oligomeric PET substrate" refers to a molecule according to Formula I:

Formula I

Either end of Formula I may be a carboxyl end group (COOH) or a hydroxyl end group (OH). Therefore, either $R_1$ or $R_2$ may be a carboxyl end group or a hydroxyl end group. The optimum ratio of hydroxyl end group: carboxyl end group (HEG:CEG) in the oligomeric PET substrate is typically between 1.66 and 6.66. Formula I polymerises with itself in an esterification reaction, in which carboxyl end groups react with hydroxyl end groups to form an ester link, liberating water. The "n" represents the degree of polymerisation (Dp) or number of repeat units of Formula I that exist in the oligomeric PET substrate and may, for example, be between 3 and 7 or between 25 and 35. In addition to being characterised by the degree of polymerisation (Dp), the oligomeric PET substrate is also characterised by its carboxyl acid end group concentration, referred to herein as CEG. The CEG (units are mols acid ends / te of material) may, for example, be between 500 and 1200 or between 700 and 1100.

Aspects of the present disclosure provide methods for manufacturing an oligomeric PET substrate from post-consumer PET-containing waste material. Approaches to produce rPET have typically used the process of glycolyzing PET (or waste sources comprising PET such as PCR flake) using for example, ethylene glycol, to produce bis-hydroxylethyleneterephthalate (rBHET) monomer. This conventional approach to producing rPET uses rBHET and polymerizes it to produce rPET. However, this rBHET has a lower reactivity as compared to a PTA-based oligomer formed through an esterification reaction of purified terephthalic acid with ethylene glycol. Therefore, when used to make rPET, the rBHET yields approximately 20% less the amount of rPET as compared to the amount of vPET made using a PTA-based oligomer (formed through an esterification reaction of purified terephthalic acid with ethylene glycol), for comparable processes.

In the present disclosure, it is unexpectedly found that combined hydrolysis and glycolysis can be used to produce an oligomeric PET substrate having an increased reactivity as compared to rBHET (formed by glycolysis of PET-containing waste material such as PCR flake). Specifically, ethylene glycol and water were added to PET-containing waste material and the oligomeric PET substrate was produced. The oligomeric PET substrate is represented by Formula I:

The oligomeric PET substrate as represented by Formula I was shown to have an increased reactivity as compared to unmodified oligomer e.g. rBHET.

An aspect of the present invention therefore provides methods to produce an oligomeric PET substrate.

In embodiments, water and ethylene glycol are added together, at the same time, to enable the respective reactions. However, in alternative embodiments, the water may be added before the ethylene glycol is added or the ethylene glycol may be added before the water is added. In further embodiments, the water and/or ethylene glycol may be partially added, followed by additional more water and/or ethylene glycol, e.t.c..

The oligomeric PET substrate (Formula I) has an optimum ratio of carboxyl end group: hydroxyl end group of typically between 0.15 and 0.6, and preferably between 0.25 and 0.45, as described in US 3551386 A. The degree of polymerization (Dp) or number of repeat units of the oligomeric PET substrate (Formula I) that exist in the oligomeric PET substrate is typically between 3 and 7. In addition to being characterised by the degree of polymerization (Dp) and the ratio of carboxyl end group: hydroxyl end group, the oligomeric PET substrate is also characterised by its carboxyl acid end group concentration, referred to herein as CEG. The CEG (units being mols acid ends / te of material) is typically between 300 and 1500, and preferably between 500 and 1200 or between 700 and 1100.

The source of the benefit associated to the optimised end group ratio is found in the balance of the reaction rates for esterification over polycondensation, the relative partial pressures of the condensation products, i.e. of water and ethylene glycol, and the balance of the chemical equilibrium constants of esterification as compared with polycondensation. This balance results in a natural optimum in the range 0.25 to 0.45 as specified earlier.

In one non-limiting embodiment, the ethylene glycol is added in the range 5wt% to 50wt%. One non-limiting example of a preferred range for the ethylene glycol is in the range 10wt% to 40wt%. A further non-limiting example of a preferred range for the ethylene glycol is in the range 12wt% to 18wt%.

In one non-limiting embodiment, the water is added in the range 2wt% to 20wt%. One non-limiting example of a preferred range for the water is in the range 5wt% to 10wt%. A further non-limiting example of a preferred range for the ethylene glycol is in the range 6wt% to 8wt%.

In one non-limiting embodiment, the ethylene glycol and water were added together, and specifically the ethylene glycol was added at 12-18wt% and the water was added at 5wt% to 9wt%.

In one non-limiting embodiment, the ethylene glycol and water were reacted with a post-consumer PET-containing waste material at a pressure between 3barg and 30 barg (300 kPag and 3000 kPag). This pressure is typically created in the reaction zone commonly referred to as an esterification unit.

In a further non-limiting embodiment, the residence time for the reaction of the ethylene glycol and water with the post-consumer PET-containing waste material in the esterification unit is between 30 minutes and 120 minutes. A further non-limiting example of a preferred range for the residence time is between 40 and 50 minutes.

The post-consumer PET-containing waste material is reacted with ethylene glycol and water in a reaction zone, which is early in the PET manufacturing process and typically precedes the line reactor at which stage additives are added into the process.

The reaction may be catalysed or uncatalyzed, depending on the composition of the post-consumer PET-containing waste material. A post-consumer PET-containing waste material comprises latent catalyst because the waste PET contains catalyst as a result of its manufacturing process. In an embodiment in which PCR flake is entirely used as the post-consumer PET-containing waste material, there may be no requirement to add exogenous catalyst because the catalyst needed for the reaction of the ethylene glycol and water with the post-consumer PET-containing waste material (being PCR flake in this embodiment) is already present. Nevertheless, additional catalyst may still be added where necessary. However, in an embodiment in which PCR flake is not entirely used as the post-consumer PET-containing waste material but rather used in combination with polyester fibre derived from waste polyester sources, such as shirts, bedlinen, coat and duvet linings or municipal waste, such that content of PET substrate is lower than when PCR flake is entirely used as the post-consumer PET-containing waste material, it is necessary to add exogenous catalyst. The catalyst may be present in an amount of approximately 150 to 200 ppm in such waste polyester sources. It would be preferable to increase the amount of catalyst to approximately 180 to 320 ppm, and preferably 240 to 280 ppm. Non-limiting examples of catalysts that may be added to the reaction include catalysts comprising antimony, titanium, zinc, manganese, germanium, aluminium or tin. These may be, for example, antimony trioxide, antimony glycolate, antimony triacetate, titanium alkoxide, zinc acetate or manganese acetate. Such catalysts are added to the reaction zone typically known as the esterification unit. A titanium-containing catalyst is typically added at 2-100ppm, and preferably around 10 ppm. All other catalysts (except a titanium-containing catalyst) are typically added at 40-300ppm, preferably around 240 ppm.

In one non-limiting embodiment, the present invention relates to a method for the synthesis of oligomeric PET substrate from a post-consumer PET-containing waste material, wherein the post-consumer PET-containing waste material comprises substantially PCR flake derived from waste PET plastic bottles.

In one non-limiting embodiment, PCR flake is reacted with ethylene glycol and water to produce the oligomeric PET substrate. In some non-limiting embodiments, the oligomeric PET substrate is used in a rPET manufacturing process, one that had previously been designed to synthesise vPET but which has been retrofitted to make rPET. In an alternative non-limiting embodiment, the oligomeric PET substrate is used in a rPET manufacturing process that was specifically designed from the outset to make rPET. The oligomeric PET substrate may be fed directly or indirectly into said rPET manufacturing process.

In one non-limiting embodiment, the post-consumer PET-containing waste material may be PCR flake or polyester fibre. The polyester fibre may be derived from waste polyester sources, such as shirts, bedlinen, coat and duvet linings or municipal waste.

Another aspect of the present invention also relates to an oligomeric PET substrate produced by or obtainable by a method as described herein. In one non-limiting embodiment, the present invention relates to oligomeric PET substrate produced by using PCR flake.

A further aspect of the present invention also relates to PET polymer made from 5-100% rPET and manufactured in a polymerization process using oligomeric PET substrate produced by or obtainable by a method as described herein. The claimed PET polymer may therefore comprise both rPET and vPET.

## EXAMPLES

Aspects of the disclosure are demonstrated by process modelling examples of continuous polymerization (CP) operation which illustrate the predicted impact of mixed hydrolysis and glycolysis on PCR flake.

Separately the invention has also been demonstrated on a 20L (litre) semi-works scale batch reactor using the

following experimental protocol.

Typically, either 8kg of PTA-based oligomer or 10.58kg of BHET were charged to the reactor under ambient conditions along with sufficient antimony trioxide catalyst to achieve 280ppm Sb (as element), cobalt acetate tetrahydrate to achieve 40ppm Co (as element) and triethyl phosphate to achieve 20ppm P (as element). As per the detailed examples below, other additives were added as described. The reactor was then isolated under a nitrogen blanket and heat applied. The reactor temperature setpoint was then set to 260°C and as the content's temperature increased, the reactor pressure rose naturally in accordance with the volatiles, water and ethylene glycol predominantly, vapour pressure. During this time and throughout this initial period the contents were agitated at 50 - 1200rpm. Once 260°C had been established the reactor was held for the pre-determined time, typically 30 to 60 minutes, before the pressure was released to atmospheric pressure and an oligomeric liquid sample taken. The vapours released during the pressure let down were condensed and collected in a receiving vessel. Once the oligomeric sample had been collected, vacuum was applied to the reactor stepwise from 1000 mbara (100 kPaa) to full vacuum, typically less than 2 mbara (0.2 kPaa), in 250 mbara (25 kPaa) steps with 15 minutes per step. At the same time the reactor temperature setpoint was raised to 290°C. The reactor temperature setpoint was typical achieved by the end of the vacuum let down; typically, after 60 minutes. The following period is referred to as the polycondensation time when the contents are held at 290°C, under full vacuum and agitated at 100rpm. These conditions were maintained until the agitator torque reached a predetermined value of 15Nm, associated with an intrinsic viscosity (iV) of 0.54 dl/g at which point the vacuum was released and the agitator stopped to degas the resulting polymer. Throughout, the volatiles were condensed and collected as before. When degassing was complete, typically after 10 minutes, the molten polymer was discharged by 2barg (200 kPag) overpressure and pelletised via a cooling trough.

The resulting polymer was then subjected to various standard PET analytical procedures including iV, carboxyl end group analysis (COOH), diethylene glycol analysis (DEG), CIE colour analysis and X-ray fluorescence (XRF) analysis for metals content.

**Comparative Example 1:**

| Parameter | Value | Units |
|---|---|---|
| | | |
| BHET | 8.0 | kg |
| H2O | 0.0 | kg |
| PTA | 0.0 | kg |
| CoAc.4H2O | 1.36 | g |
| TEP | 0.94 | g |
| | | |
| Oligomer hold | | |
| Temp | 250 | °C |
| Pressure | 1.9 (190) | barg (kPag) |
| time | 40 | mins |
| Oligomer COOH | 40.7 | microeq/g |
| | | |
| Polymerization | | |
| Temp | 290 | °C |
| Pressure | 1.5 (150) | mbara (kPag) |
| time | 75 | mins |
| | | |
| iV | 0.549 | dl/g |
| COOH | 30.7 | microeq/g |
| Sb | 361 | ppm |

(continued)

| Polymerization | | |
|---|---|---|
| P | 15.7 | ppm |
| Co | 49.2 | ppm |
| L | 45.61 | CIE |
| b | 11.5 | CIE |

In this case 8.0kg of rPET sourced BHET was polymerized at 290°C. As can be seen in the table the polymer made had a COOH value of 30.7 microequivalents/g, an iV of 0.549dl/g, an L colour of 45.61 and a b colour of 11.5. The oligomer COOH number quoted in the table is for the starting material. The polymerization time was 75 minutes.

**Comparative Example 2:**

| Parameter | Value | Units |
|---|---|---|
| | | |
| PTA oligomer | 8.0 | kg |
| H2O | 0.0 | kg |
| PTA | 0.0 | kg |
| CoAc.4H2O | 1.36 | g |
| TEP | 0.94 | g |
| | | |
| Oligomer hold | | |
| Temp | 250 | °C |
| Pressure | 2.8 (280) | barg (kPag) |
| time | 50 | mins |
| Oligomer COOH | 924 | microeq/g |
| | | |
| Polymerization | | |
| Temp | 290 | °C |
| Pressure | 1.8 (180) | mbara (kPaa) |
| time | 95 | mins |
| | | |
| iV | 0.541 | dl/g |
| COOH | 26.4 | microeq/g |
| Sb | 274 | ppm |
| P | 55 | ppm |
| Co | 39 | ppm |
| L | 63.99 | CIE |
| b | 9.89 | CIE |

In Comparative Example 2, 8.0kg of commercial-scale PTA-based oligomer was polymerized at 290°C. As can be seen in the table, the polymer made had a COOH value of 26.4 microequivalents/g, an iV of 0.541dl/g, an L colour of

63.99 and a b colour of 9.89. The oligomer COOH number quoted in the table is for the starting material. The polymerization time was 95 minutes.

**Comparative Example 3:**

| Parameter | Value | Units |
|---|---|---|
| | | |
| PTA | 6.92 | kg |
| EG | 3.62 | kg |
| H2O | 0.0 | kg |
| PTA | 0.0 | kg |
| CoAc.4H2O | 1.36 | g |
| TEP | 0.94 | g |
| | | |
| Oligomer hold | | |
| Temp | 250 | °C |
| Pressure | 1.9 (190) | barg (kPag) |
| time | 40 | mins |
| Oligomer COOH | | microeq/g |
| | | |
| Polymerization | | |
| Temp | 290 | °C |
| Pressure | 1.5 (150) | mbara (kPaa) |
| time | 75 | mins |
| | | |
| iV | 0.535 | dl/g |
| COOH | 30.9 | microeq/g |
| Sb | 211 | ppm |
| P | 11 | ppm |
| Co | 27.5 | ppm |
| L | 59.45 | CIE |
| b | 12.56 | CIE |

In this case, 6.92kg of vPTA was reacted with 3.62kg of ethylene glycol at 246°C for nine hours. The pressure of the sealed autoclave was allowed to rise naturally as esterification took place but was vented periodically from 9barg (900 kPag) down to 4barg (400 kPag) to allow the release of water. When no further pressure rise was observed, i.e. esterification was complete, the vessel was allowed to cool and the additives charged as in the previous examples. The resulting oligomer was then polymerized at 290°C. As can be seen in the table the polymer made had a COOH value of 30.9 microequivalents/g, an iV of 0.535dl/g, an L* colour of 59.45 and a b* colour of 12.56. No oligomer COOH number is available for this example. The polymerization time was 75 minutes.

**Example 4:**

| Parameter | Value | Units |
|---|---|---|
| | | |
| PCR flake | 5.0 | kg |
| H2O | 0.38 | kg |
| EG | 0.63 | kg |
| CoAc.4H2O | 40 | ppm |
| TEP | 20 | ppm |
| Oligomer COOH | 564 | microeq/g |
| | | |
| Oligomer hold | | |
| Temp | 259 | °C |
| Pressure | 9.0 (900) | barg (kPag) |
| time | 60 | mins |
| | | |
| Polymerization | | |
| Temp | 290 | °C |
| Pressure | 1.8 (180) | mbara (kPaa) |
| time | 90 | mins |
| | | |
| iV | 0.582 | dl/g |
| COOH | 23.2 | microeq/g |
| Sb | 298 | ppm |
| P | 8.6 | ppm |
| Co | 18.2 | ppm |
| L | 44.3 | CIE |
| b | 12.62 | CIE |

In this case, 0.38kg of water and 0.63kg of ethylene glycol was added to 5.0kg of post-consumer recycle PET flake and held at 259°C for 60mins. During this time the agitator torque fell from an initial 18Nm to 0.1Nm, indicative of glycolysis having taken place. The oligomer was then polymerized at 290°C as in previous examples. As can be seen in the table, the polymer made had a COOH value of 23.2 microequivalents/g, an iV of 0.582dl/g, an L* colour of 44.3 and a b* colour of 12.62. The oligomer COOH number of 564 microquivalents/g is significantly higher than that of the starting material indicative of hydrolysis having taken place. The polymerization time was 90 minutes.

**Example 5:**

The following and subsequent examples take the form of a process model simulations of three vessel CP process operating at 450 tonnes per day making a typical bottle resin grade PET. The reactor train comprises an Esterifier, UFPP and Finisher vessel. The process conditions used for the simulation are described below:

| Parameter | Value | Units |
|---|---|---|
| | | |
| Esterifier | | |
| Feed mole ratio | 1.89 | moles EG: moles TA |

(continued)

| Esterifier | | |
|---|---|---|
| Temperature | 270 | °C |
| Pressure | 0.1 (10) | barg (kPag) |
| Residence time | 199 | mins |
| | | |
| Additives zone | | |
| Sb | 280 | ppm |
| P | 20 | ppm |
| Co | 40 | ppm |
| EG | 200 | kg/hr |
| Oligomer COOH | 815 | microequiv/g |
| Oligomer OH/COOH | 3.63 | |
| | | |
| UFPP | | |
| Temperature | 294 | °C |
| Pressure | 20 | mmHg |
| Residence time | 27.9 | mins |
| | | |
| Finisher | | |
| Temperature | 293 | °C |
| Pressure | 2.29 | mmHg |
| Residence time | 49.5 | mins |
| | | |
| iV | 0.56 | dl/g |
| COOH | 43.0 | microequiv/g |
| L | 67.3 | CIE |
| b | -0.61 | CIE |
| | | |

The key parameters of interest are the oligomer OH:COOH value of 3.63 and the 2.29mmHg finisher pressure. Within the simulation as we increase the Esterifier feed mole ratio the effect is to alter the oligomer OH:COOH upwards and this impacts the reactivity and hence the predicted Finisher vacuum requirement as described in US 3551386 A. We can see this predicted effect in the figure below.

INVISTA CP simulation (0.56iV, 293C)
Finisher P/mmHg
2.5
2.4
2.3
2.2
2.1
2
1.9
1.8
1.7
1.6
1.5
2.5
3.0
3.5
4.0
4.5
5.0
Oligomer OH:COOH

An alternative way to represent this is to simulate the plant rate, or plant capacity as function of oligomer OH:COOH whilst maintaining a constant Finisher vacuum. This is shown in the following chart.

INVISTA CP simulation (0.56iV, 293C)
plant rate/tpd
450
445
440
435
430
425
420
2.5
3.0
3.5
4.0
4.5
5.0
Oligomer OH:COOH

A change in oligomer OH:COOH from ~3.1 to ~3.6 is clearly worth ~5% in plant capacity.

**Example 6:**

The following is a predicted example of the same three vessel CP process as in Example 5 operating at 450 tonnes per day making the same typical bottle resin grade PET, but this time with a BHET feed.

| Parameter | Value | Units |
|---|---|---|
| | | |
| Additives zone | | |
| BHET | 24800 | kg/hr |
| Sb | 280 | ppm |
| P | 20 | ppm |
| Co | 40 | ppm |
| EG | 0 | kg/hr |
| Oligomer COOH | 17 | microequiv/g |
| Oligomer OH/COOH | 508 | |
| | | |
| UFPP | | |
| Temperature | 294 | °C |
| Pressure | 20 | mmHg |
| Residence time | 27.9 | mins |
| | | |
| Finisher | | |
| Temperature | 293 | °C |
| Pressure | 1.58 | mmHg |
| Residence time | 49.5 | mins |
| | | |
| iV | 0.56 | dl/g |
| COOH | 14.0 | microequiv/g |
| L | 59.2 | CIE |
| b | -1.76 | CIE |
| | | |

The key parameters of interest are the very high 508 oligomer OH:COOH and the much reduced 1.58mmHg finisher pressure requirement. This oligomer OH:COOH is so large as to be off the chart above for capacity and in this case to raise the Finisher pressure to 2.3mmHg, as in example 5, we must drop the plant rate to 390tpd, representing a capacity reduction of some 20%. The deterioration in L* colour is also significant.

**Example 7:**

In this example we take a typical PCR feed of 0.76iV, 27.4 COOH at 450tpd PET resin through a pressurised CSTR glycolysis simulation at 3000mmHg pressure, 260°C and a 64min residence time. Varying the amounts of water and ethylene glycol with the feed we predict the following results:

| H2O/kgp h added | %H2O added | EG/kgph added | %EG added | Oligomer COOH microeq/g | Oligomer OH:COOH | Oligomer Dp |
|---|---|---|---|---|---|---|
| | | | | | | |
| 0 | 0 | 375 | 2 | 29.1 | 23.0 | 16.8 |
| 0 | 0 | 750 | 4 | 27.9 | 45.5 | 9.93 |
| 0 | 0 | 1125 | 6 | 26.6 | 69.5 | 7.43 |

(continued)

| H2O/kgp h added | %H2O added | EG/kgph added | %EG added | Oligomer COOH microeq/g | Oligomer OH:COOH | Oligomer Dp |
|---|---|---|---|---|---|---|
| 188 | 1.0 | 1125 | 6 | 367 | 5.93 | 5.5 |
| 375 | 2.0 | 1125 | 6 | 679 | 3.65 | 4.54 |
| 469 | 2.5 | 1125 | 6 | 826 | 3.17 | 4.21 |
| 563 | 3.0 | 1125 | 6 | 968 | 2.85 | 3.95 |
| 619 | 3.3 | 1125 | 6 | 1050 | 2.70 | 3.81 |
| | | | | | | |

Or graphically, for example as resulting oligomeric OH:COOH and Dp against %H2O added 6% ethylene glycol below:

INVISTA CP simulation (0.56iV, 293C)
Finisher P/mmHg
7.0
6.0
5.0
4.0
3.0
2.0
1.0
0.0
0.5
1.0
1.5
2.0
2.5
3.0
3.5
%H2O @ 6%EG
Oligomer OH:COOH
Oligomer Dp

Re-feeding these oligomers forward through the CP process, as described in example 6, we get the following set of predictions:

| Oligomer Dp | Oligomer COOH | Oligomer OH:COOH | Finisher COOH / microeq/g | Finisher P / mmHg |
|---|---|---|---|---|
| | | | | |
| 16.8 | 29.1 | 23.0 | 13.7 | 1.50 |
| 9.93 | 27.9 | 45.5 | 13.8 | 1.50 |
| 7.43 | 26.6 | 69.6 | 13.8 | 1.50 |
| 5.5 | 367 | 5.93 | 14.1 | 1.53 |
| 4.54 | 679 | 3.65 | 21.6 | 1.88 |
| 4.21 | 826 | 3.17 | 34.7 | 2.23 |
| 3.95 | 968 | 2.85 | 58.4 | 2.05 |
| 3.81 | 1050 | 2.70 | 78.8 | 1.07 |

(continued)

| Oligomer Dp | Oligomer COOH | Oligomer OH:COOH | Finisher COOH / microeq/g | Finisher P / mmHg |
|---|---|---|---|---|
| | | | | |

Or graphically as Finisher pressure required against %H2O with 6%EG added below:

INVISTA CP simulation (0.56iV, 293C)
Finisher P/mmHg
2.40
2.20
2.00
1.80
1.60
1.40
1.20
1.00
0.0
0.5
1.0
1.5
2.0
2.5
3.0
3.5
%H2O @ 6%EG

A clear optimum is seen at around 2.5%H2O with 6%EG as represented by a maximum in the predicted Finisher vacuum requirement. Again, graphically as Finisher vacuum requirement against oligomer OH:COOH below:

INVISTA CP simulation (0.56iV, 293C)
Finisher P/mmHg
2.40
2.20
2.00
1.80
1.60
1.40
1.20
1.00
0.0
1.0
2.0
3.0
4.0
5.0
6.0
7.0
Oligomer OH:COOH

Now we see an optimum oligomer OH:COOH of around 3.3:1. Clearly, based on the improvement in Finisher

vacuum requirement, the operation of the plant can be restored to the full 450tpd when an optimised glycolysis / hydrolysis oligomer is added to the process.

## Claims

1. A method for producing an oligomeric PET substrate from post-consumer PET-containing waste material, wherein said oligomeric PET substrate is for use in a rPET manufacturing process, comprising the steps of:

   i) Reacting post-consumer PET-containing waste material in the presence of ethylene glycol and water in a reaction zone; and
   ii) Producing an oligomeric PET substrate represented by Formula I:

   (I)

   wherein R1 is a carboxyl end group or a hydroxyl end group, R2 is a carboxyl end group or a hydroxyl end group, and n is a degree of polymerization; and
   wherein n is 3 to 10, preferably 3 to 7.

2. The method according to claim 1, wherein said oligomeric PET substrate has a carboxyl acid end group concentration (CEG) (mols acid ends / te of material) of from 300 to 1500, preferably from 500 to 1200 and more preferably from 700 to 1100.

3. The method according to any preceding claim, wherein said oligomeric PET substrate has a hydroxyl end group:carboxyl end group ratio in a range of 1.66 to 6.66, preferably in a range of 2.22 to 4.0.

4. The method according to any preceding claim, wherein said ethylene glycol and water are added in either order or together, and/or
   wherein said ethylene glycol is added in a range of 5wt% to 50wt%, preferably in a range of 10wt% to 40wt% and more preferably in a range of 12wt% to 18wt%, and/or wherein said water is added in a range of 2wt% to 20wt%, preferably in a range of 5wt% to 10wt% and more preferably in a range of 6wt% to 8wt%.

5. The method according to any preceding claim, wherein said ethylene glycol is added in a range of 12wt% to 18wt% and said water is added in a range of 5wt% to 9wt%.

6. The method according to any preceding claim, wherein said waste material is reacted with ethylene glycol and water at a temperature in a range of 120°C to 300°C, preferably in a range of 150°C to 270°C.

7. The method according to any preceding claim, wherein said waste material is reacted with ethylene glycol and water in said reaction zone at a pressure between 3barg and 30 barg.

8. The method according to claim 1, wherein said reaction zone precedes the injection of additives.

9. The method according to claim 1, comprising a residence time in said reaction zone between 30 minutes and 120 minutes, preferably between 40 minutes and 50 minutes.

10. The method according to claim 1, wherein said reaction is catalysed by a catalyst already present in said post-consumer PET-containing waste material or is an exogenously added catalyst;

    optionally wherein said exogenously added catalyst is a commonly used PET catalyst selected from an antimony-containing catalyst, titanium-containing catalyst, a zinc-containing catalyst, an acetate-containing catalyst, a

manganese-containing catalyst, an aluminium-containing catalyst or a tin-containing catalyst; optionally wherein said catalyst is any one of antimony trioxide, antimony glycolate, antimony triacetate, titanium alkoxide, zinc acetate or manganese acetate.

**11.** The method according to claim 1, wherein said rPET manufacturing process is a conventional rPET manufacturing process or a modified vPET manufacturing process.

**12.** The method according to claim 1, wherein said post-consumer PET-containing waste material comprises post-consumer recycled flake or polyester fibre.

**13.** The method according to claim 1, wherein said oligomeric PET substrate is fed directly or indirectly into said rPET manufacturing process.

**14.** An oligomeric PET substrate produced from post-consumer PET-containing waste material, wherein said oligomeric PET substrate is represented by Formula I:

(I)

$R_1$ being a carboxyl end group or a hydroxyl end group, $R_2$ being a carboxyl end group or a hydroxyl end group, and n being a degree of polymerization, wherein said oligomeric PET substrate is represented by any two of these characteristics:

i) n is a degree of polymerization of from 3 to 10, preferably from 3 to 7;
ii) a CEG (mols acid ends / te of material) of between 300 and 1500; or
iii) a hydroxyl end group:carboxyl end group ratio in a range of 1.66 to 6.66,

and wherein said oligomeric PET substrate is suitable for use in synthesis of a polymer comprising 5-100% rPET.

## Patentansprüche

**1.** Verfahren zur Herstellung eines oligomeren PET-Substrats aus PET-haltigem Post-Consumer-Abfallmaterial, wobei das oligomere PET-Substrat zur Verwendung in einem rPET-Herstellungsprozess bestimmt ist, umfassend die folgenden Schritte:

i) Umsetzen von PET-haltigem Post-Consumer-Abfallmaterial in Gegenwart von Ethylenglykol und Wasser in einer Reaktionszone; und
ii) Herstellen eines oligomeren PET-Substrats der Formel I:

(I)

wobei R1 eine Carboxyl-Endgruppe oder eine Hydroxyl-Endgruppe ist, R2 eine Carboxyl-Endgruppe oder eine Hydroxyl-Endgruppe ist und n den Grad der Polymerisation angibt; und
wobei n 3 bis 10, vorzugsweise 3 bis 7 beträgt.

**2.** Verfahren nach Anspruch 1, wobei das oligomere PET-Substrat eine Carbonsäure-Endgruppenkonzentration (CEG) (Mol Säureenden/te des Materials) von 300 bis 1500, vorzugsweise von 500 bis 1200 und noch bevorzugter von 700 bis 1100 aufweist.

3. Verfahren nach einem der vorstehenden Ansprüche, wobei das oligomere PET-Substrat ein Verhältnis von Hydroxyl-Endgruppen zu Carboxyl-Endgruppen im Bereich von 1,66 bis 6,66, vorzugsweise im Bereich von 2,22 bis 4,0, aufweist.

4. Verfahren nach einem der vorstehenden Ansprüche, wobei das Ethylenglykol und das Wasser in beliebiger Reihenfolge oder gemeinsam zugegeben werden, und/oder wobei das Ethylenglykol in einem Bereich von 5 Gew.-% bis 50 Gew.-%, vorzugsweise in einem Bereich von 10 Gew.-% bis 40 Gew.-% und noch bevorzugter in einem Bereich von 12 Gew.-% bis 18 Gew.-% zugegeben wird, und/oder
wobei das Wasser in einem Bereich von 2 Gew.-% bis 20 Gew.-%, vorzugsweise in einem Bereich von 5 Gew.-% bis 10 Gew.-% und noch bevorzugter in einem Bereich von 6 Gew.-% bis 8 Gew.-% zugegeben wird.

5. Verfahren nach einem der vorstehenden Ansprüche, wobei das Ethylenglykol in einem Bereich von 12 Gew.-% bis 18 Gew.-% und das Wasser in einem Bereich von 5 Gew.-% bis 9 Gew.-% zugegeben wird.

6. Verfahren nach einem der vorstehenden Ansprüche, wobei das Abfallmaterial mit Ethylenglykol und Wasser bei einer Temperatur im Bereich von 120 °C bis 300 °C, vorzugsweise im Bereich von 150 °C bis 270 °C, umgesetzt wird.

7. Verfahren nach einem der vorstehenden Ansprüche, wobei das Abfallmaterial in der Reaktionszone bei einem Druck zwischen 3 barg und 30 barg mit Ethylenglykol und Wasser umgesetzt wird.

8. Verfahren nach Anspruch 1, wobei die Reaktionszone der Einspritzung von Zusatzstoffen vorgeschaltet ist.

9. Verfahren nach Anspruch 1, das eine Verweilzeit in der Reaktionszone zwischen 30 Minuten und 120 Minuten, vorzugsweise zwischen 40 Minuten und 50 Minuten, umfasst.

10. Verfahren nach Anspruch 1, wobei die Reaktion durch einen bereits in dem PEThaltigen Post-Consumer-Abfallmaterial vorhandenen Katalysator katalysiert wird oder es sich um einen exogen zugesetzten Katalysator handelt;

wobei der exogen zugesetzte Katalysator optional ein üblicherweise verwendeter PET-Katalysator ist, ausgewählt aus einem antimonhaltigen Katalysator, einem titanhaltigen Katalysator, einem zinkhaltigen Katalysator, einem acetathaltigen Katalysator, einem manganhaltigen Katalysator, einem aluminiumhaltigen Katalysator oder einem zinnhaltigen Katalysator;
gegebenenfalls wobei der Katalysator irgendwelches von Antimontrioxid, Antimonglykolat, Antimontriacetat, Titanalkoxid, Zinkacetat oder Manganacetat ist.

11. Verfahren nach Anspruch 1, wobei der rPET-Herstellungsprozess ein herkömmlicher rPET-Herstellungsprozess oder ein modifizierter vPET-Herstellungsprozess ist.

12. Verfahren nach Anspruch 1, wobei das PET-haltige Post-Consumer-Abfallmaterial recycelte Post-Consumer-Flocken oder Polyesterfasern umfasst.

13. Verfahren nach Anspruch 1, wobei das oligomere PET-Substrat direkt oder indirekt in den rPET-Herstellungsprozess eingebracht wird.

14. Oligomeres PET-Substrat, das aus PET-haltigem Post-Consumer-Abfallmaterial hergestellt wird, wobei das oligomere PET-Substrat durch die Formel I dargestellt wird:

(I)

wobei $R_1$ eine Carboxyl-Endgruppe oder eine Hydroxyl-Endgruppe ist, $R_2$ eine Carboxyl-Endgruppe oder eine Hydroxyl-Endgruppe ist und n den Grad der Polymerisation angibt, wobei das oligomere PET-Substrat durch zwei beliebige der folgenden Merkmale gekennzeichnet ist:

i) n ist ein Grad der Polymerisation von 3 bis 10, vorzugsweise von 3 bis 7;
ii) ein CEG (Mol Säureendgruppen / te des Materials) zwischen 300 und 1500; oder
iii) ein Verhältnis von Hydroxyl-Endgruppen zu Carboxyl-Endgruppen im Bereich von 1,66 bis 6, 66,

und wobei das oligomere PET-Substrat für die Verwendung bei der Synthese eines Polymers, das 5-100 % rPET umfasst, geeignet ist.

## Revendications

**1.** Procédé de production d'un substrat de PET oligomère à partir de déchets contenant du PET post-consommation, dans lequel ledit substrat de PET oligomère est destiné à être utilisé dans un processus de fabrication de rPET, comprenant les étapes suivantes :

i) la mise en réaction de déchets contenant du PET post-consommation en présence d'éthylène glycol et d'eau dans une zone de réaction ; et
ii) la production d'un substrat de PET oligomère représenté par la formule I :

(I)

dans lequel R1 est un groupe terminal carboxyle ou un groupe terminal hydroxyle, R2 est un groupe terminal carboxyle ou un groupe terminal hydroxyle, et n est un degré de polymérisation ; et
dans lequel n est compris entre 3 et 10, de préférence entre 3 et 7.

**2.** Procédé selon la revendication 1, dans lequel ledit substrat de PET oligomère a une concentration de groupe terminal acide carboxylique (CEG) (moles d'extrémités acides/te de matériau) de 300 à 1500, de préférence de 500 à 1 200 et de préférence encore de 700 à 1100.

**3.** Procédé selon une quelconque revendication précédente, dans lequel ledit substrat de PET oligomère a un rapport groupe terminal hydroxyle/groupe terminal carboxyle compris entre 1,66 et 6,66, de préférence entre 2,22 et 4,0.

**4.** Procédé selon une quelconque revendication précédente, dans lequel ledit éthylène glycol et ladite eau sont ajoutés dans un ordre quelconque ou simultanément, et/ou

dans lequel ledit éthylène glycol est ajouté dans une proportion de 5 % en poids à 50 % en poids, de préférence de 10 % en poids à 40 % en poids et de préférence encore de 12 % en poids à 18 % en poids, et/ou
dans lequel ladite eau est ajoutée dans une proportion de 2 % en poids à 20 % en poids, de préférence dans une proportion de 5 % en poids à 10 % en poids et de préférence encore dans une proportion de 6 % en poids à 8 % en poids.

**5.** Procédé selon une quelconque revendication précédente, dans lequel ledit éthylène glycol est ajouté dans une proportion de 12 % en poids à 18 % en poids et ladite eau est ajoutée dans une proportion de 5 % en poids à 9 % en poids.

**6.** Procédé selon une quelconque revendication précédente, dans lequel ledit déchet est mis en réaction avec l'éthylène glycol et l'eau à une température comprise entre 120 °C et 300 °C, de préférence entre 150 °C et 270 °C.

**7.** Procédé selon une quelconque revendication précédente, dans lequel ledit déchet est mis en réaction avec de l'éthylène glycol et de l'eau dans ladite zone de réaction à une pression comprise entre 3 barg et 30 barg.

**8.** Procédé selon la revendication 1, dans lequel ladite zone de réaction précède l'injection d'additifs.

**9.** Procédé selon la revendication 1, comprenant un temps de séjour dans ladite zone de réaction compris entre 30 minutes et 120 minutes, de préférence entre 40 minutes et 50 minutes.

**10.** Procédé selon la revendication 1, dans lequel ladite réaction est catalysée par un catalyseur déjà présent dans ledit déchet contenant du PET post-consommation ou est un catalyseur ajouté de manière exogène ;

de manière facultative dans lequel ledit catalyseur ajouté de manière exogène est un catalyseur PET couramment utilisé, choisi parmi un catalyseur contenant de l'antimoine, un catalyseur contenant du titane, un catalyseur contenant du zinc, un catalyseur contenant de l'acétate, un catalyseur contenant du manganèse, un catalyseur contenant de l'aluminium ou un catalyseur contenant de l'étain ;
de manière facultative, dans lequel ledit catalyseur est un élément parmi le trioxyde d'antimoine, le glycolate d'antimoine, le triacétate d'antimoine, l'alcoxyde de titane, l'acétate de zinc ou l'acétate de manganèse.

**11.** Procédé selon la revendication 1, dans lequel ledit processus de fabrication de rPET est un processus de fabrication de rPET conventionnel ou un processus de fabrication de vPET modifié.

**12.** Procédé selon la revendication 1, dans lequel ledit déchet contenant du PET post-consommation comprend des flocons ou des fibres de polyester post-consommation recyclés.

**13.** Procédé selon la revendication 1, dans lequel ledit substrat de PET oligomère est introduit directement ou indirectement dans ledit processus de fabrication de rPET.

**14.** Substrat de PET oligomère produit à partir de déchets contenant du PET post-consommation, ledit substrat de PET oligomère étant représenté par la formule I :

(I)

$R_1$ étant un groupe terminal carboxyle ou un groupe terminal hydroxyle, $R_2$ étant un groupe terminal carboxyle ou un groupe terminal hydroxyle, et n étant un degré de polymérisation, dans lequel ledit substrat de PET oligomère est représenté par deux caractéristiques quelconques parmi ces caractéristiques :

i) n est un degré de polymérisation de 3 à 10, de préférence de 3 à 7 ;
ii) un CEG (moles d'extrémités acides/te de matériau) compris entre 300 et 1 500 ; ou
iii) un rapport groupe terminal hydroxyle/groupe terminal carboxyle compris entre 1,66 et 6, 66,

et dans lequel ledit substrat de PET oligomère convient à une utilisation dans la synthèse d'un polymère comprenant de 5 % à 100 % de rPET.

UFPP
Finisher
Additives injection
Reaction zone
Ethylene glycol/$H_2O$
PCR flake
Oligomeric PET substrate

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3551386 A

### Non-patent literature cited in the description

- **CASTRO ALINE MACHADO DE et al.** *Biochemical Engineering Journal*, 2018, vol. 137, 239-246